# EUROPEAN PATENT APPLICATION

(11) **EP 0 538 482 A1**
(43) Date of publication of application: **28.04.1993**
(21) Application number: 92909492.8
(22) Date of filing: 28.04.1992
(51) Int. Cl.: G05B 19/05

(54) **METHOD FOR DEBUGGING SEQUENTIAL PROGRAM**

(30) Priority: 10.05.1991 JP 135657/91
(71) Applicant: FANUC LTD., Minamitsuru-gun, Yamanashi 401-05 (JP)
(72) Inventor: TANAKA, Kunio, 5-8-13, Tamagawacho, Tokyo 196 (JP); ONISHI, Yasushi, Fanuc Mansion Harimomi 8-304, Yamanashi 401-05 (JP)
(74) Representative: Brunner, Michael John
(86) International application number: JP9200562
(87) International publication number: WO9221073

(57) **Abstract**

A method for debugging a sequential program, which can prevent operation tests from being omitted in debugging. A process (A), condition (C1), process (C), and condition (C2) which have been executed already are highlighted unlike a process (B) which has not been executed yet. A process (D) which is executing at the present time is blinked. Therefore, it is easily confirmed at a glance that the process (B) of step S2 has not been executed yet, and anyone of the operation tests can be prevented from being omitted in debugging.

## Description

### TECHNICAL FIELD

The present invention relates to a debugging system for a sequence program executed by a programmable controller, and more specifically, to a debugging system for a sequence program created by a flowchart system.

### BACKGROUND ART

Although a sequence program executed by a programmable controller is expressed by a logic description, ladder diagram or the like, a flow of jobs as a whole can be understood best by a sequence program expressed by a flowchart system. The flowchart system sometimes expresses a step as a unit of process, as in a sequential function chart (SFC) system. Even the SFC, however, employs a conventional logic description or ladder diagram as a program for expressing a specific operation in each process.

Conventionally, the debugging of the portion of a sequence program created by a ladder diagram or the like is executed by, for example, tracing the state of a signal while an operation test is carried out and confirming the state at a display unit. With this method, the rapidly changing state of a signal can be confirmed by at first glance. Further, the debugging of the portion of a sequence program created by a sequential function chart system or the like is executed by an operator confirming the operating state thereof during an operation test, because this debugging can be executed only by confirming the operating state of each unit of process.

Nevertheless, when a sequence program created by the SFC system has the increased number of processes and further includes divergence commands and the like, the number of routes for executing the program is increased. In this case, it is difficult for an operator to confirm all of the routes. Therefore, even if the operation of processes used not so often is not tested, this fact may not be aware of.

### DISCLOSURE OF THE INVENTION

Taking the above into consideration, an object of the present invention is to provide a debugging system for a sequence program by which a process the operation of which is not yet tested can be prevented in debugging.

To attain the above object, according to the present invention, there is provided a debugging system of a sequence program executed by a programmable controller (PC), comprising the steps of displaying the sequence program by a flowchart system composed of a plurality of steps at a display screen, displaying a step being executed at present of the plurality of steps by a first display pattern, and displaying steps having been executed of the plurality of steps by a second display pattern.

Since the step being executed at present is displayed by the first display pattern and the steps having been executed are displayed by the second display pattern, steps not yet executed can be confirmed at first glance. As a result, a process the operation of which is not tested can be prevented in debugging.

### BRIEF DESCRIPTION OF THE DRAWINGS

Figure 1 is a diagram showing an operating state of a sequence program being debugged according to the present invention;
Figure 2 is a block diagram of the hardware of a numerical control apparatus (CNC) as a whole embodying the present invention; and
Figure 3 is a diagram showing a sequence program according to a SFC system displayed at a display unit.

### BEST MODE OF CARRYING OUT THE INVENTION

An embodiment of the present invention will be described below with reference to the drawings.

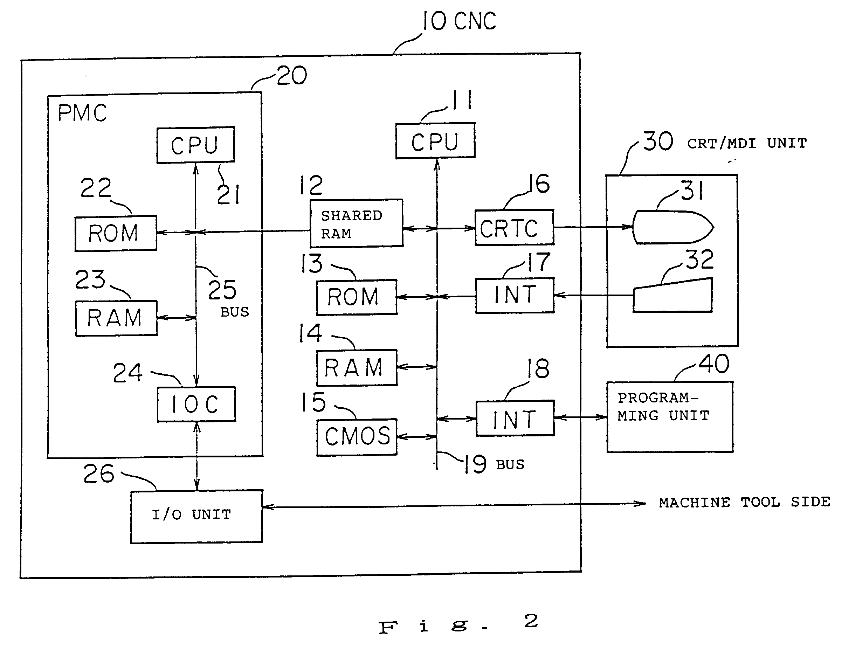

Figure 2 is a block diagram of the hardware of a numerical control apparatus (CNC) as a whole embodying the present invention. A programmable machine controller (PMC) 20 is a kind of a programmable controller (PC) and incorporated in the numerical control apparatus (CNC) 10. A processor 11, which controls the numerical control apparatus (CNC) as a whole, reads out a system program stored in a ROM 13, through a bus 19, and controls the numerical control apparatus (CNC) 10 as a whole according to the system program.

A shared RAM 12 enables the CNC 10 to transfer or receive data to or from the PMC 20 and thus the CNC 10 and PMC 20 transfer data to each other through the shared RAM 12. Further, the shared RAM 12 stores data needed to allow a simultaneous access by the CNC 10 and PMC 20.

A RAM 14 stores temporary calculation data, display data, and the like. A CMOS 15 is composed of a non-volatile memory which stores amounts of tool correction, amounts of pitch error correction, machining programs, parameters, and the like, these data are maintained even after a power supply to the numerical control apparatus (CNC) 10 is cut off, because the CMOS 15 is supplied with power from a not shown battery and is a non-volatile memory. Further, the CMOS 15 stores parameters and the like needed by the PMC 20.

A graphic control circuit 16 converts digital data such as the present position of each axis, an alarm, parameters, image data, and the like into image signals and output same to the display unit 31 of a CRT/MDT unit 30, to be displayed thereat. The parameters, ladder diagrams, and the like of the PMC 20 also can be displayed at the display unit 31. Data at this time is supplied from the PMC 20 through the shared RAM 12.

An interface 17 receives data from the keyboard 32 in the CRT/MDI unit 30 and supplies same to a processor 11. Further, data to the PMC 20 can be input through the keyboard 32 and supplied to the PMC 20 through the shared RAM 12.

An interface 18 is connected to a programming unit 40. A machining program created by the programming unit 40 is read through the interface 18. Further, a machining program edited in the numerical control apparatus (CNC) 10 can be output to the programming unit 40.

The elements such as the processor 11, shared RAM 12, ROM 13, and the like are interconnected through the bus 19. Note, an axis control circuit for controlling servo motors and the like, a servo amplifier, a spindle control circuit, a spindle amplifier, an interface for a manual pulse generator and the like are not shown in the figure.

The programmable machine controller (PMC) 20 is provided with a processor 21 for it, which is connected to the shared RAM 12 through a bus 25, and the shared RAM 12 is connected to the bus 19 of the CNC 10.

Further, a ROM 22 is connected to the bus 25, and stores a management program and sequence program for controlling the PMC 20. Although the sequence program is generally created by the use of a ladder language, it is sometimes created by a high-level language such as PASCAL or the like. Further, in this embodiment, the sequence program is also created by an SFC system which treats a unit of process as a single step and can be displayed at the display unit 31.

Further, a RAM 23 is connected to the bus 25 and stores an I/O signal, and the content thereof is rewritten as the sequence program is executed.

An I/O control circuit 24 is connected to the bus 25, converts an output signal stored in the RAM 23 into a serial signal, and transfers same to an I/O unit 26. Further, the I/O control circuit 24 converts a serial input signal from the I/O unit 26 into a parallel signal and transfers same to the bus 25. The signal is stored in the RAM 23 by the processor 21. An I/O signal stored in the RAM 23 can be displayed at the display unit 31 of the CRT/MDI unit 30.

The processor 21 receives command signals such as an M function signal, T function signal and the like from the CNC 10 through the shared RAM 12. These command signals are temporarily stored in the RAM 23, processed according to the sequence program stored in the ROM 22, and then output to the I/O unit 26 through the I/O control circuit 24. These output signals control hydraulic units, pneumatic units, and magnetic units of a machine tool side.

Further, the processor 21 receives input signals such as a limit switch signal on the machine tool side, a signal from the operation switch on a machine operation panel and the like from the I/O unit 26, and temporarily stores these input signals in the RAM 23. Input signals not required to be processed by the PMC 20 are transferred to the processor 11 through the shared RAM 12; other signals are processed by the sequence program and a part of the signals is output to the CNC, and the remaining signals are output as an output signal from the I/O unit 26 to the machine tool through the I/O control circuit 24.

Further, the sequence program can include commands for controlling the movement and the like of each axis, and when read by the processor 21, these commands are transferred to the processor 11 through the shared RAM 12, to control the servo motors. The spindle motors and the like may be similarly controlled by commands from the PMC.

Further, the sequence program and the like created by the programming unit 40 may be transferred to the RAM 23 and the PMC 20 can be operated by the sequence program of the RAM 23.

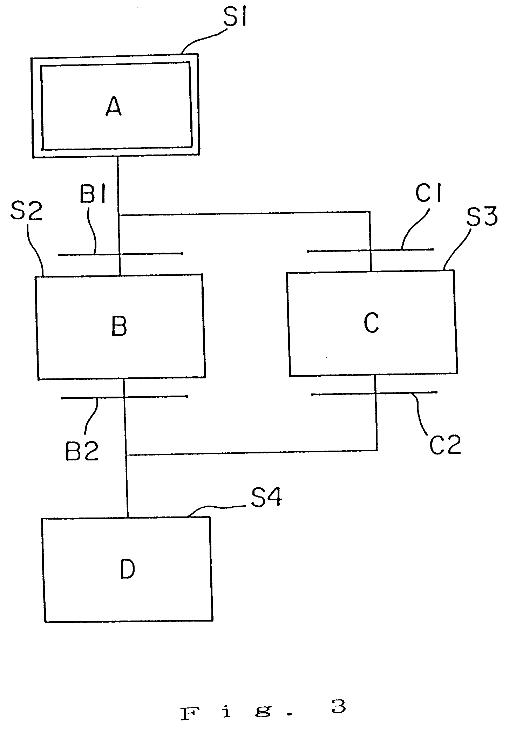

Next, a debugging system of a sequence program of the numerical control apparatus 10 arranged as described above will be described. Here, a debugging system of a sequence program created by the SFC system will be described. Figure 3 is a diagram showing the sequence program according to the SFC system displayed at the display unit 31. In this embodiment, the SFC system is assumed to be composed of only four processes A - D, for the simplification of description.

First, the process A is executed at step S1. A specific command for executing the process A is created by a ladder program. The process A is assumed to be, for example, a command for waiting parts to be transported. While the program of this process A is executed, whether the step goes to a process B or a process C next is determined by conditions B1 and B2, respectively. For example, when the parts being transported are parts b to be processed by the process B, the step goes to step S2 to execute the process B, whereas when the parts being transported are parts c to be processed by the process C, the step goes to step S3 to execute the process C. These conditions are determined in response to a signal or the like input from a sensor disposed at the process A.

Conditions B2 and C2 determine whether or not the processes B and C are finished and this determination is executed in response to signals input from the sensors disposed at the respective processes. When any of the processes B and C is executed, the step goes to step 4 to execute a process D.

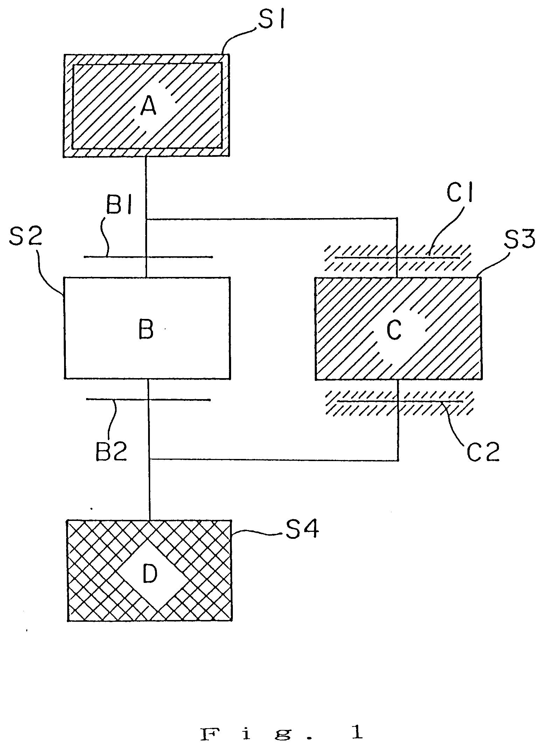

Figure 1 is a diagram showing an operating state of a sequence program being debugged. Figure 1 shows the state that step 3 is executed following to step S1 and step S4 is executed at present. More specifically, the process A having been executed, the condition C1, the process C and the condition C2 are displayed at a higher luminance than that of the process B not yet executed and the process D being executed at present is flashingly displayed. As a result, it is found at first glance that the process B of step S2 is not yet executed. Therefore, the operator need only test the operation of the process B next.

Although it is assumed in the sequence program shown in Figure 1 that the SFC system is composed only of the process A - D for the simplification of description, actually the considerable number of processes are contained in the SFC system, and thus it is very difficult for the operator to confirm all of the processes. According to the present embodiment, however, since a process not yet operated can be confirmed at first glance, the occurrence a process the operation of which is not yet tested can be easily prevented.

Note, in the above description, although a step having been executed is displayed at a higher luminance and further a process being executed is flashingly displayed, they may be distinguished by color as an alternative method.

Further, in this embodiment, although a flowchart system is described with reference to the SFC system as an example thereof, the present invention can be applied to another system.

As described above, according to the present invention, since a step being executed at present and a step having been executed are displayed by a first display pattern and second display pattern, respectively, a step which is not yet executed can be confirmed at first glance. Therefore, a process the operation of which is not tested can be prevented in debugging.

## Claims

1. A debugging system for a sequence program executed by a programmable controller (PC), comprising the steps of:
displaying said sequence program by a flowchart system composed of a plurality of steps at a display screen;
displaying a step being executed at present of said plurality of steps by a first display pattern; and
displaying steps having been executed of said plurality of steps by a second display pattern.

2. A debugging system for a sequence program according to claim 1, wherein said flowchart system is a sequential functional chart (SFC) system.

3. A debugging system for a sequence program according to claim 1, wherein said first display pattern is flashingly displayed and said second display pattern is displayed at a higher luminance as compared with the display pattern of steps not yet executed.

4. A debugging system for a sequence program according to claim 1, wherein said first display pattern is distinguished from said second display pattern by color.
